# EUROPÄISCHE PATENTSCHRIFT

(11) **EP 2 282 904 B1**
(45) Veröffentlichungstag und Bekanntmachung des Hinweises auf die Patenterteilung: **06.05.2015**
(21) Anmeldenummer: 09745712.1
(22) Anmeldetag: 11.05.2009
(51) Int. Cl.: B60J 5/04

(54) **FAHRERSCHUTZSYSTEM FÜR EIN FAHRZEUG**
DRIVER PROTECTION SYSTEM FOR A VEHICLE
SYSTÈME DE PROTECTION DU CONDUCTEUR D'UN VÉHICULE

(30) Priorität: 15.05.2008 DE 102008023750
(43) Veröffentlichungstag der Anmeldung: 16.02.2011
(73) Patentinhaber: IWS Ingenieurgesellschaft Weiner und Schröter MBH, 47475 Kamp-Lintfort (DE)
(72) Erfinder: SCHRÖTER, Oliver, 45470 Mülheim a. d. Ruhr (DE)
(74) Vertreter: Frank, Hartmut
(86) Internationale Anmeldenummer: PCT/EP2009/055667
(87) Internationale Veröffentlichungsnummer: WO 2009/138380

(56) Entgegenhaltungen:
- EP-A1- 1 305 192
- EP-A2- 1 686 015
- DE-U1- 20 002 106
- DE-U1- 20 020 521
- US-A- 5 035 094
- US-A1- 2002 153 718
- US-A1- 2004 173 041

## Beschreibung

### HINTERGRUND DER ERFINDUNG

### Gebiet der Erfindung

Die vorliegende Erfindung betrifft ein Fahrerschutzsystem für ein Fahrzeug, insbesondere für ein Nutzfahrzeug wie z.B. einen Gabelstapler, einen Schlepper oder eine Bau- oder Landmaschine.

### Stand der Technik

In Nutzfahrzeugen wie Gabelstaplern sind zum Schutz des Fahrers vor Verletzungen z. B. bei last- und zentrifugalkraftbedingten Unfällen oder fahrbahnbedingtem Kippen des Fahrzeuges diverse Fahrerschutzsysteme bekannt.

Aus EP 1 305 192 B1 ist ein gattungsgemässes Fahrerschutzsystem bekannt, welches einen Bügelrahmen umfasst, der an einem Holm des Fahrzeuges mit einem Scharnier angelenkt ist und an dem anderen Holm mittels eines Verriegelungssystems gehalten wird. Dieses System hat sich in der Praxis im Hinblick auf die auch bei unterschiedlichen Körpergrößen erzielte zuverlässige Schutzwirkung unter Gewährleistung einer ausreichenden Bewegungsfreiheit des Fahrers gut bewährt.

Gerade bei Gabelstaplern besteht in der Praxis ferner mitunter der Bedarf, das Fahrzeug bzw. Fahrerschutzsystem auch unter beengten Platzverhältnissen öffnen zu können. So kann beispielsweise ein Gabelstaplerfahrer zur Entnahme von Waren aus Blocklagern mit neben-, hinter- und übereinander gestapelten Paletten das Fahrzeug in Bereiche steuern, in denen die zur Verfügung stehende Breite im Wesentlichen nur einer Palettenbreite entspricht. Ähnlich beengte Platzverhältnisse können beispielsweise auch beim Be- und Entladen der Ladebühne eines LKWs vorliegen.

Beengte Platzverhältnisse bestehen auch während des elektrischen Aufladevorganges von Elektrostaplern, da hierbei die Fahrzeuge in der Regel an den jeweiligen Ladestationen dicht nebeneinander aufgestellt und an zueinander dicht benachbarte Ladegeräte angeschlossen werden. Da während dieses Ladevorganges mitunter die Fahrzeughaube vorübergehend geöffnet werden muss, um ein Entweichen von Ladegasen zu ermöglichen, wobei dann das Fahrerschutzsystem gegebenenfalls hinderlich ist, kann auch in solchen Situationen eine Öffnungsoption des Fahrerschutzsystems unter beengten Platzverhältnissen wünschenswert sein.

Aus z.B. DE 200 20 521 U1 ist eine Sicherheitseinrichtung für Fahrzeuge bekannt, bei der ein Verschwenken von Schutzbügeln um eine horizontal quer zur Fahrtrichtung bzw. zur Fahrzeuglängsrichtung verlaufende Achse erfolgt, wobei die Schutzbügel in Ruhestellung in etwa vertikal und in Sicherungsstellung in etwa horizontal stehen.

Derartige bekannte Systeme haben jedoch den Nachteil, dass entweder der Schutzbügel relativ kurz gehalten werden muss, um beim Öffnen des Schutzbügels ein Anstoßen am oberen Dachholm zu vermeiden, wodurch der Schutzbereich für den Fahrer in der Sicherungsstellung verkleinert wird, oder dass zur Ermöglichung der Schwenkbewegung die vorhandenen Schutzbügel bereits in Sicherungsstellung seitlich über die Fahrzeugkontur hinausragen und damit gerade unter beengten Platzverhältnissen vom Fahrer beschädigt oder sogar abgefahren werden können.

US 2004/0173041 A1 offenbart u. a. einen teleskopischen Aktuator, welcher beispielsweise in Verbindung mit Antennen, chirurgischen Anwendungen, Werkzeugen oder Fahrzeugsteuerungen einsetzbar bzw. für solche Anwendungen bestimmt ist, welche einen ausdehnbaren bzw. verlängerbaren Arm erfordern. Zur Ausdehnung bzw. Verlängerung des Aktuators wird eine Führungsschraube in solcher Weise rotiert, dass diese eine translatorische Bewegung aus einem hiermit in Eingriff befindlichen Segment heraus vollzieht, wodurch die Länge des Aktuators vergrößert wird.

### ZUSAMMENFASSUNG DER ERFINDUNG

Es ist eine Aufgabe der vorliegenden Erfindung, ein Fahrerschutzsystem für ein Fahrzeug bereitzustellen, welches auch unter beengten Platzverhältnissen ein vorübergehendes Aussteigen des Fahrers ermöglicht und zugleich in der Sicherungsstellung weiterhin eine zuverlässige Schutzwirkung gewährleistet.

Diese Aufgabe wird gemäß den Merkmalen des unabhängigen Patentanspruches 1 gelöst.

Ein Fahrerschutzsystem für ein Fahrzeug weist einen Rückhaltebügel auf, der zwischen einer Sicherungsstellung, in welcher der Rückhaltebügel einen Fahrer gegen Herausfallen aus dem Fahrzeug sichert, und einer Freigabestellung, in welcher der Rückhaltebügel ein Aussteigen des Fahrers aus dem Fahrzeug ermöglicht, schwenkbar ist, wobei der Rückhaltebügel in der Freigabestellung relativ zu der Sicherungsstellung in Richtung der Schwenkachse versetzt ist.

Dadurch, dass gemäß der Erfindung eine unter beengten Platzverhältnissen vorteilhafte Überführung des Rückhaltebügels in die Freigabestellung mittels der Schwenkbewegung um eine Schwenkachse (welche insbesondere gemäß einer Ausführungsform quer zur Fahrzeuglängsrichtung verläuft) mit einer in Richtung bzw. entlang der Schwenkachse erfolgenden Versetzung des Rückhaltebügels kombiniert wird, wird erreicht, dass die besagte Schwenkung des Rückhaltebügels in die Freigabestellung erfolgen kann, ohne dass sich hierzu der Rückhaltebügel bereits in seiner Sicherungsstellung ganz oder auch nur teilweise außerhalb der Fahrzeugkontur befinden muss. Einer etwaigen Behinderung der Schwenkbewegung durch sicherheitsrelevante oder dem Komfort dienende Anbauteile des Rückhaltebügels muss bei dem erfindungsgemäßen Fahrerschutzsystem nicht bereits in der Sicherungsstellung (also etwa im Fahrbetrieb) Rechnung getragen werden, sondern eine Behinderung der Schwenk- bzw. Aufwärtsbewegung kann durch die axiale Versetzung vermieden werden.

Die Formulierung, wonach der Rückhaltebügel in Richtung der Schwenkachse versetzt ist, ist hier und im Folgenden so zu verstehen, dass von der Erfindung auch noch gewisse Abweichungen (z. B. von weniger als 10°, bevorzugt weniger als 5°, noch bevorzugter weniger als 2°) zwischen der Richtung, in der die Versetzung erfolgt, und der exakten Lage der Schwenkachse umfasst werden. Des Weiteren können die jeweiligen Achsen der Schwenkbewegung und der Versetzung auch sowohl vertikal als auch horizontal versetzt (sowie parallel zueinander) angeordnet sein.

Gemäß einer Ausführungsform nimmt der Rückhaltebügel in der Freigabestellung eine zumindest näherungsweise vertikale bzw. aufgerichtete Position ein. Unter der Formulierung "zumindest näherungsweise" ist hier zu verstehen, dass hiervon auch noch gewisse Abweichungen von der Vertikalen bzw. der aufgerichteten Position um einen Winkel von maximal 20°, insbesondere maximal 10°, weiter insbesondere maximal 5°, umfasst werden.

Insbesondere kann der Rückhaltebügel in der Freigabestellung relativ zu der Sicherungsstellung im Wesentlichen aufgerichtet sein. Dabei ist darauf hinzuweisen, dass die Erfindung nicht auf ein Aufwärtsschwenken des Rückhaltebügels zur Überführung in die Freigabestellung beschränkt ist, sondern der Rückhaltebügel gemäß einer weiteren Ausführungsform auch vom Fahrer abwärts bzw. nach unten hin weggeschwenkt werden kann. Eine solche, durch Abwärtsschwenkung des Haltebügels erreichte Position des Rückhaltebügels ist somit ebenfalls als vertikale bzw. "aufgerichtete Position" im vorstehenden Sinne zu verstehen.

Gemäß einer Ausführungsform führt der Rückhaltebügel beim Verschwenken eine Bewegung in Richtung seiner Schwenkachse aus. Diese Bewegung kann insbesondere, wie noch näher erläutert, durch ein Kraftübertragungselement wie z.B. eine Druckfeder unterstützt werden.

Gemäß einer Ausführungsform erfolgt die Schwenkbewegung des Rückhaltebügels von der Sicherungsstellung in die Freigabestellung mit einem Schwenkwinkel von 90°±20°, insbesondere von 90°±10°, weiter insbesondere von genau 90°.

Gemäß einer Ausführungsform ist die Schwenkachse gegenüber der Horizontalen geneigt. Dabei kann der Neigungswinkel dieser Neigung insbesondere wenigstens 1° betragen und liegt vorzugsweise im Bereich von 2° bis 6°.

Gemäß einer Ausführungsform ist der Rückhaltebügel an dem Fahrzeug derart angebracht, dass der Schwenkbewegung eine quer zur Fahrzeuglängsrichtung gerichtete Translationsbewegung des Rückhaltebügels überlagert ist. Mit anderen Worten erfolgt die Überführung des Rückhaltebügels aus der Sicherungsstellung in die Freigabestellung mittels einer kombinierten Schwenk- und Translationsbewegung, wobei die Translationsbewegung quer zur Fahrzeuglängsrichtung bzw. axial in Richtung der Schwenkachse verläuft und dabei automatisch und gleichzeitig mit der Schwenkbewegung realisiert wird.

Gemäß einer alternativen Ausführungsform kann die Translationsbewegung auch unabhängig bzw. getrennt von der Schwenkbewegung erfolgen, indem etwa der Rückhaltebügel zunächst aus der Sicherungsstellung axial in Richtung der Schwenkachse versetzt und erst anschließend in die aufgerichtete Position bzw. Freigabestellung geschwenkt wird.

Gemäß einer Ausführungsform befindet sich der Rückhaltebügel in der Sicherungsstellung zumindest teilweise noch innerhalb der Fahrzeugkontur. Des Weiteren kann sich der Rückhaltebügel in der Freigabestellung vollständig außerhalb der Fahrzeugkontur befinden. Dabei sollen Anordnungen von den vorstehend genannten Kriterien als mit umfasst gelten, bei denen sich der Rückhaltebügel zu einem vergleichsweise geringen relativen Anteil (z.B. bis auf weniger als 10% seiner maximalen Erstreckung in der betreffenden Richtung quer zur Fahrzeuglängsrichtung) noch außerhalb bzw. noch innerhalb der Fahrzeugkontur befindet.

Gemäß einer Ausführungsform ist zum Aussteigen des Fahrers eine seitliche Öffnung des Fahrzeuges vorgesehen, wobei sich der Rückhaltebügel in der Sicherungsstellung in Fahrzeuglängsrichtung im Wesentlichen über die gesamte Ausdehnung, welche die seitliche Öffnung auf Höhe des Rückhaltebügels aufweist, erstreckt. Auf diese Weise wird zuverlässig verhindert, dass der Fahrer in einer gefährlichen Situation über einen nicht abgesicherten Bereich der Ausstiegsöffnung vom Fahrzeug abspringen kann. Dabei wird insbesondere vorteilhaft von der erfindungsgemäßen Wirkung Gebrauch gemacht, dass das Fahrerschutzsystem auch unter beengten Verhältnissen infolge des vorstehend beschriebenen Bewegungsablaufs beim Öffnen des Rückhaltebügels ein vorübergehendes Aussteigen des Fahrers ermöglicht. Infolgedessen ist es nicht erforderlich, zum Ermöglichen eines Aussteigens unter beengten Verhältnissen etwa durch verkürzte Ausbildung des Rückhaltebügels einen Bereich ungesichert zu lassen, und die Sicherheit wird bei dem erfindungsgemäßen System weiter erhöht. Des Weiteren kann so zur weiteren Erhöhung der Sicherheit eine Verriegelung des Rückhaltebügels in seinem in Fahrzeuglängsrichtung vorderen Bereich erfolgen, wodurch die seitliche Öffnung bzw. die Fahrzeugkontur in Fahrzeuglängsrichtung nach vorne hin vollständig abgeschlossen wird.

Gemäß einer Ausführungsform wird der Rückhaltebügel in der Sicherungsstellung an einem Holm des Fahrzeuges über ein Verriegelungssystem lösbar gehalten.

Gemäß einer Ausführungsform ist der Rückhaltebügel an einem Holm des Fahrzeuges mittels wenigstens eines Federelementes, welches z.B. als Federstahlblech ausgestaltet sein kann, angelenkt, wobei dieses Federelement in der Sicherungsstellung vorgespannt ist. Dabei kann insbesondere der Rückhaltebügel durch das Federelement nach Lösen des Verriegelungssystems aus einer in Fahrzeuglängsrichtung ausgerichteten Lage in eine zumindest teilweise seitwärts geöffnete Lage überführt werden. Vorzugsweise befindet sich dabei der Rückhaltebügel in dieser zumindest teilweise seitwärts geöffneten Lage wenigstens teilweise noch innerhalb der Fahrzeugkontur.

Gemäß einer Ausführungsform erfolgt die Versetzung bei der Überführung von der Sicherungs- in die Freigabestellung in Richtung der Schwenkachse um eine Strecke von wenigstens 15mm, bevorzugt wenigstens 30mm, weiter bevorzugt wenigstens 40mm.

Gemäß einer Ausführungsform ist die Schwenkachse gegenüber der Horizontalen um einen Winkel von wenigstens 1°, bevorzugt im Bereich 2° bis 6°, geneigt. Dabei erfolgt diese Neigung bevorzugt (vom Fahrzeuginneren in Richtung zur Fahrzeugkontur gesehen) nach oben, falls die Überführung aus der Sicherungsstellung in die Freigabestellung wie vorstehend beschrieben mittels eines Aufwärtsschwenkens des Rückhaltebügels erfolgt. Entsprechend ist für den Fall, dass der Rückhaltebügel aus der Sicherungsstellung in die Freigabestellung vom Fahrer abwärts bzw. nach unten hin weggeschwenkt wird, die Neigung bevorzugt (vom Fahrzeuginneren bis zur Fahrzeugkontur gesehen) nach unten.

Durch die vorstehend beschriebene Neigung kann, wie im Weiteren noch detaillierter erläutert wird, erreicht werden, dass eine nach dem Lösen des Verriegelungssystems zu Beginn der Aufwärtsbewegung des Rückhaltebügels durch die Federelemente bewirkte Öffnungsbewegung des Rückhaltebügels aus der Fahrzeugkontur heraus zum Ende der Schwenkbewegung hin wieder kompensiert wird, der Rückhaltebügel mit seinem zunächst seitwärts abstehenden Abschnitt also wieder an das Fahrzeug herangeführt und eine gegebenenfalls störende Schrägstellung des Rückhaltebügels in der Freigabestellung vermieden wird.

Gemäß einer Ausführungsform ist der Rückhaltebügel an dem Fahrzeug über eine die Versetzung des Rückhaltebügels in Richtung der Schwenkachse bewirkende Druckfeder befestigt.

Gemäß einer Ausführungsform ist der Rückhaltebügel an dem Fahrzeug über eine Vorrichtung bzw. ein Drehführungselement befestigt, welches derart ausgelegt ist, dass es der Schwenkbewegung des Rückhaltebügels eine Translationsbewegung zur Erzielung der Versetzung bzw. axialen Bewegung des Rückhaltebügels überlagert.

Das im Weiteren noch detaillierter beschriebene Drehführungselement, welche eine definierte Drehbewegung bzw. Rotation um eine Achse mit einer axialen Bewegung bzw. Translation entlang dieser Achse kombiniert, ist grundsätzlich für beliebige Anwendungen vorteilhaft einsetzbar und nicht auf den Einsatz im Verbindung mit dem erfindungsgemäßen Fahrerschutzsystem beschränkt.

Die Erfindung betrifft daher gemäß einem weiteren Aspekt auch ein Drehelement zur Kopplung zweier Bauteile aneinander zur Verwendung in einem Fahrerschutzsystem mit den vorstehenden Merkmalen, mit einem ersten Teilelement zur Fixierung an einem ersten Bauteil, und einem zweiten Teilelement zur Fixierung an einem zweiten Bauteil, wobei das erste Teilelement und das zweite Teilelement derart miteinander in Wirkverbindung stehen, dass eine entlang einer Elementachse des Drehelements erfolgende Relativbewegung zwischen dem ersten Teilelement und dem zweiten Teilelement zwangsweise mit einer Verdrehung des ersten Teilelements und des zweiten Teilelementes relativ zueinander um die Elementachse einhergeht. Ein derartiges Drehelement ist aus US 2004/0173041 bekannt.

Dieses Drehelement ist dadurch gekennzeichnet, dass das erste Teilelement als ein erster Hohlzylinder ausgebildet ist und das zweite Teilelement als ein zu dem ersten Hohlzylinder konzentrisch gelagerter zweiter Hohlzylinder ausgebildet ist, wobei die konzentrische Lagerung des ersten Hohlzylinders in Bezug auf den zweiten Hohlzylinder über ein Kugelrollenlager erfolgt, wobei das Drehelement eine Druckfeder zur Übertragung einer die Relativbewegung bewirkenden Kraft auf das erste Teilelement und das zweite Teilelement aufweist. Gemäß einer Ausführungsform sind das erste Teilelement und das zweite Teilelement koaxial in Bezug auf eine gemeinsame Achse, welche insbesondere die Elementachse sein kann, angeordnet.

Die Erfindung betrifft ferner auch ein Fahrzeug, insbesondere einen Gabelstapler, mit einem Fahrerschutzsystem oder mit einem Drehelement mit den vorstehend beschriebenen Merkmalen.

Weitere Ausgestaltungen der Erfindung sind der Beschreibung sowie den Unteransprüchen zu entnehmen. Die Erfindung wird nachstehend anhand eines in den beigefügten Abbildungen dargestellten Ausführungsbeispiels näher erläutert.

### KURZE BESCHREIBUNG DER ZEICHNUNGEN

Es zeigen:
- Figur 1 a-c: schematische Darstellungen eines erfindungsgemäßen Fahrerschutzsystems in einer ersten Stellung in Seitenansicht (Figur 1a), Rückansicht (Figur 1b) sowie Vorderansicht (Figur 1c);
- Figur 2a-c: schematische Darstellungen eines erfindungsgemäßen Fahrerschutzsystems in einer zweiten Stellung in Seitenansicht (Figur 2a), Rückansicht (Figur 2b) sowie Vorderansicht (Figur 2c);
- Figur 3: eine vergrößerte Detailansicht eines in dem Fahrerschutzsystem von Figur 1 und 2 vorhandenen Federelementes; und
- Figur 4a-d: schematische Explosionsdarstellungen zur Erläuterung des Aufbaus eines in dem Fahrerschutzsystem von Figur 1 und 2 vorhandenen Drehführungselementes in perspektivischer Ansicht (Figur 4a-b) in Seitenansicht (Figur 4c), sowie in Rückansicht (Figur 4d).

### BESCHREIBUNG BEVORZUGTER AUSFÜHRUNGSFORMEN

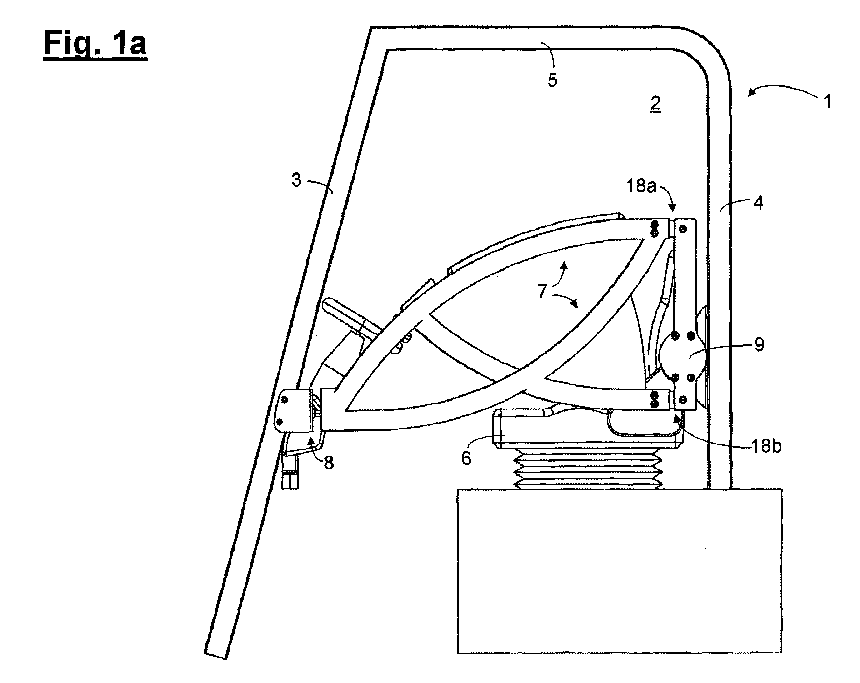

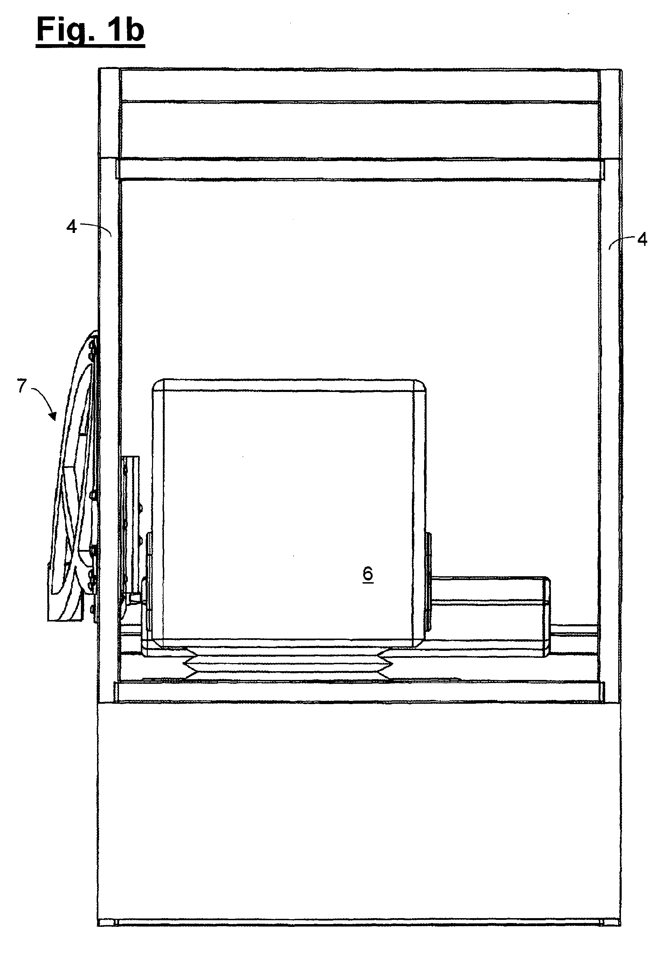

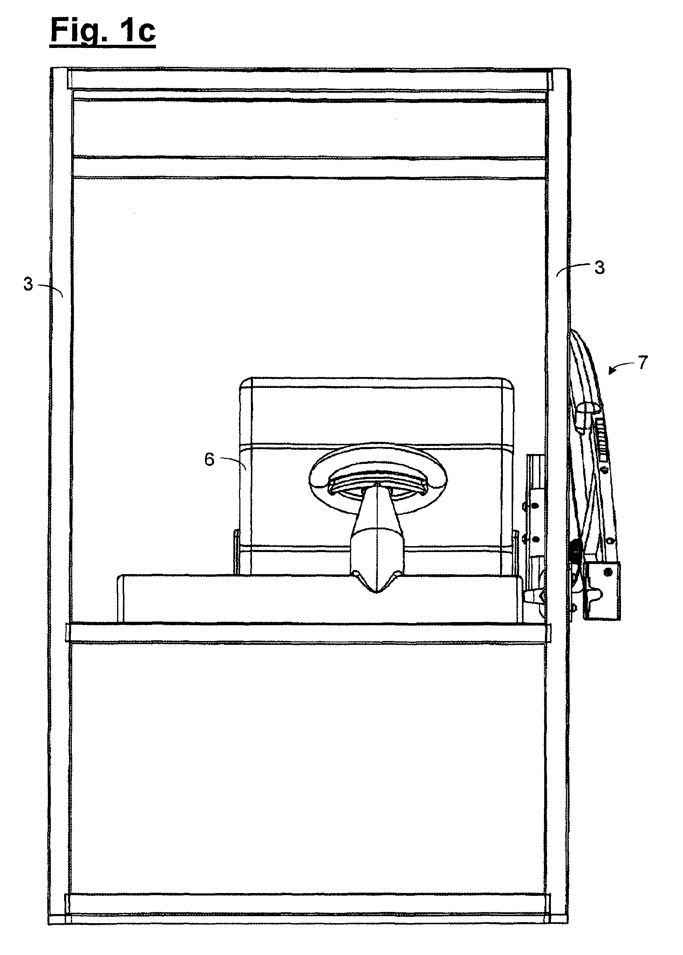

Fig. 1 a zeigt eine Seitenansicht eines Fahrerschutzdaches 1 für einen Gabelstapler mit eingebautem Fahrerschutzsystem gemäß einer Ausführungsform der vorliegenden Erfindung. Das Fahrerschutzdach 1 weist eine seitliche Öffnung 2 auf, welche durch einen vorderen Holm 3 (A-Säule), einen hinteren Holm 4 (B-Säule) sowie einen oberen Querholm 5 begrenzt ist, sowie einen Fahrzeugsitz 6.

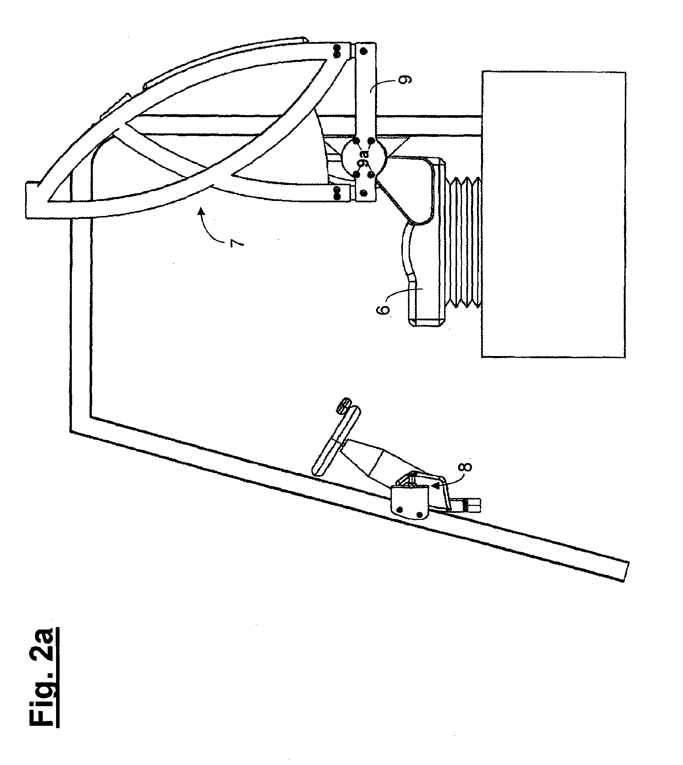

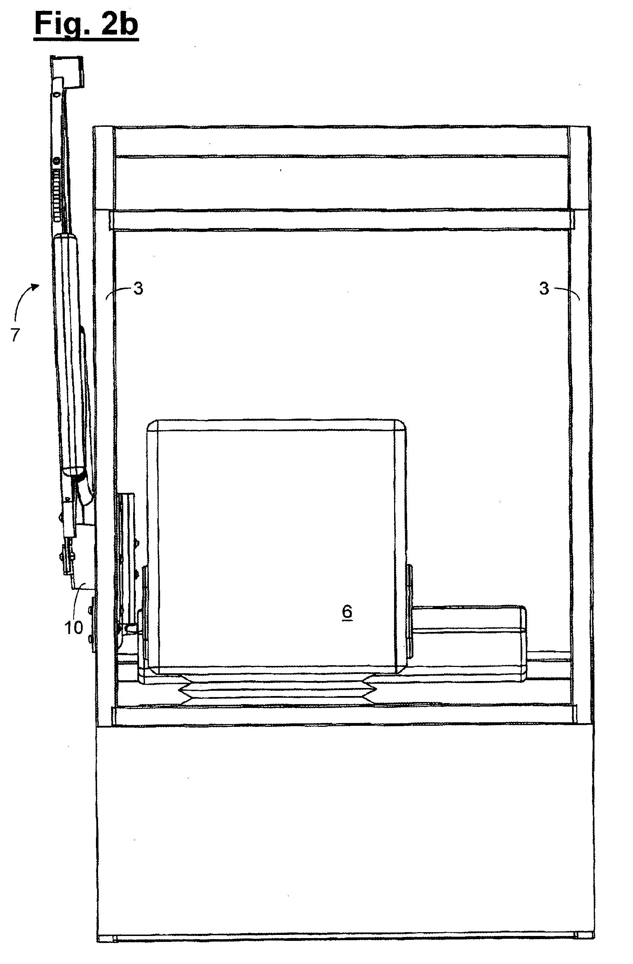

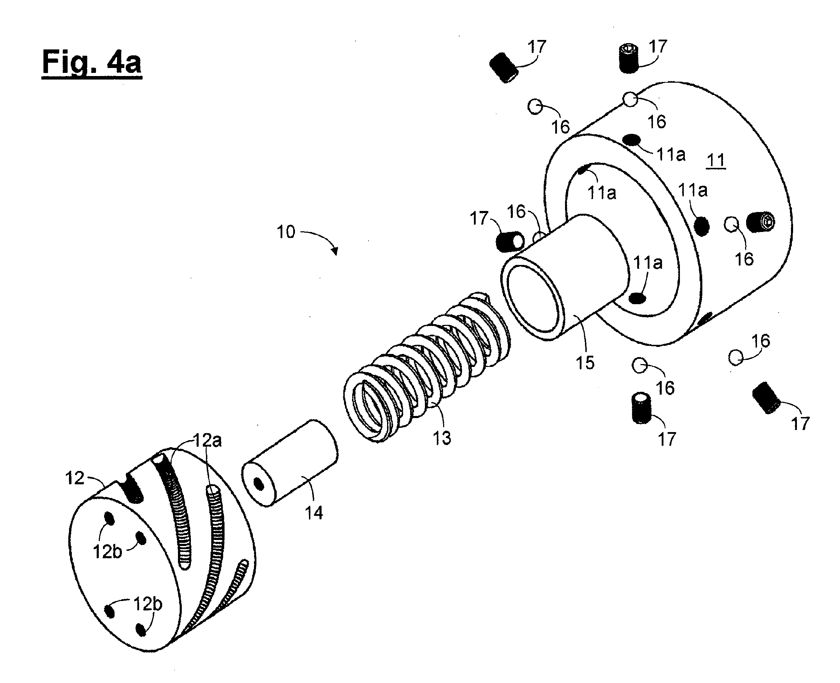

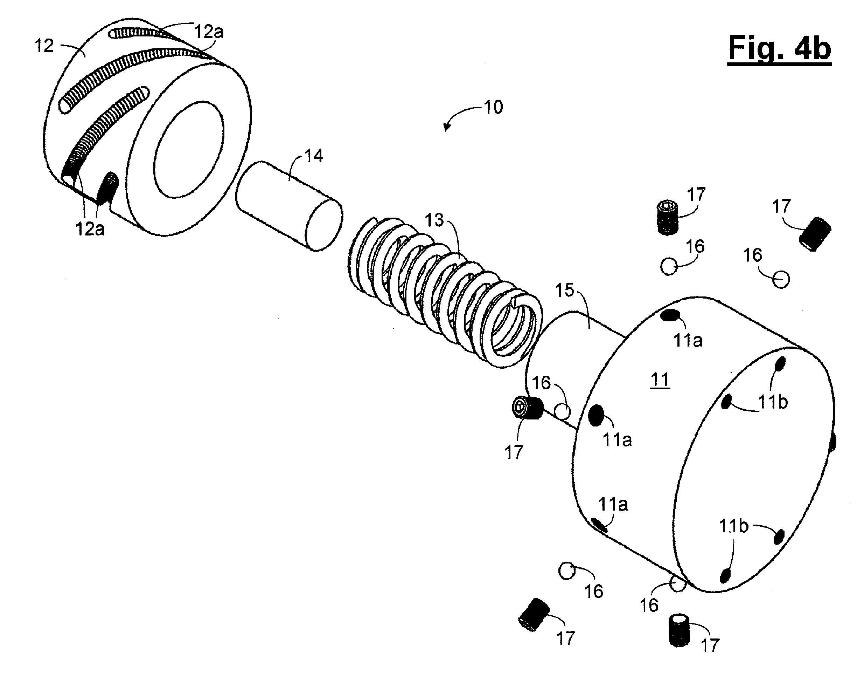

Wesentlicher Bestandteil des erfindungsgemäßen Fahrerschutzsystems ist ein Rückhaltebügel 7, der in der Sicherungsstellung des Rückhaltebügels 7 über ein Verriegelungssystem 8 am vorderen Holm 3 lösbar gehalten bzw. verriegelt wird und der an seinem entgegengesetzten Endabschnitt über ein anhand von Fig. 4a-d noch detaillierter erläutertes Drehführungselement 10 und ein mit diesem Drehführungselement 10 fest verbundenes Trägerelement 9 derart an dem Fahrzeug (insbesondere über das Trägerblech 19 am hinteren Holm 4) angebracht ist, dass der Rückhaltebügel 7 aus der in Fig. 1 a gezeigten Stellung um eine quer zur Fahrtrichtung bzw. Fahrzeuglängsrichtung verlaufende, nahezu horizontale Schwenkachse bis in die in Fig. 2a dargestellte Freigabestellung, welche ein Aussteigen des Fahrers ermöglicht, schwenkbar ist, wobei der Rückhaltebügel 7 zudem in der Freigabestellung in Richtung (d.h. entlang) der Schwenkachse versetzt ist.

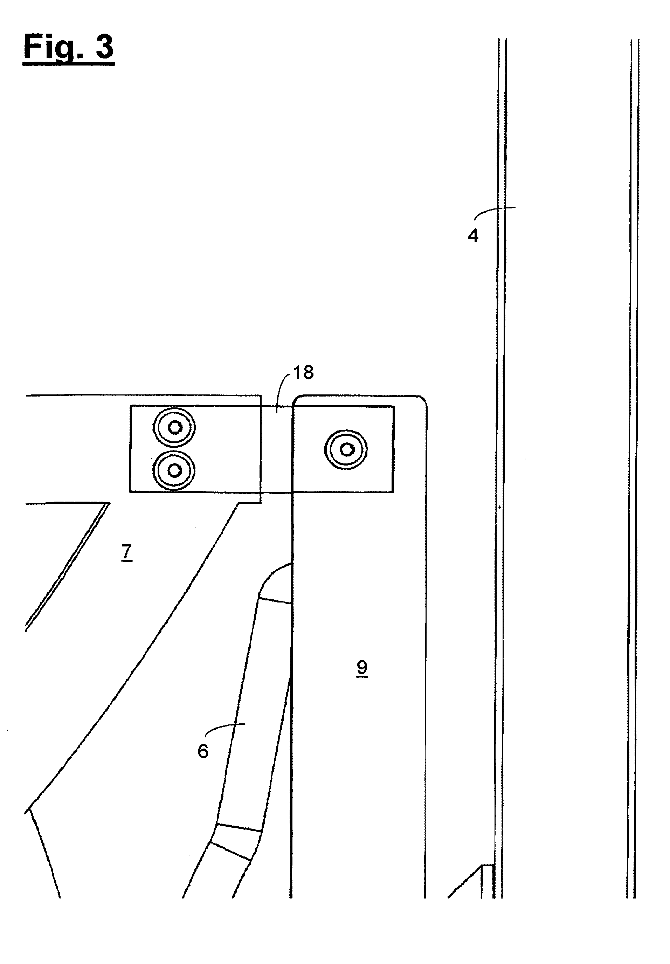

Die Anlenkung des Rückhaltebügels 7 an dem Fahrzeug an seinem dem Verriegelungssystem 8 in der Sicherungsstellung entgegengesetzten Endabschnitt (also die Anlenkung insbesondere am Holm 4) erfolgt, wie in Fig. 3 schematisch dargestellt ist, anhand von Federelementen 18, welche im Ausführungsbeispiel als im Wesentlichen laschenförmige Federstahlbleche ausgestaltet sind. Im gezeigten Ausführungsbeispiel sind zwei solcher Federelemente 18 vorgesehen, welche zueinander identisch und wie in Fig. 3 dargestellt ausgestaltet sind und den Rückhaltebügel 7 an den in Fig. 1 a mit 18a und 18b bezeichneten Positionen an beiden Endabschnitten des Trägerelementes 9 über Schraubenverbindungen fixieren.

Dabei sind die Federelemente 18 bei geschlossenem Verriegelungssystem 8 derart unter Spannung gehalten, dass sie bei Öffnen des Verriegelungssystems 8 unter Rückkehr in ihre ursprüngliche entspannte Position den Rückhaltebügel 7 um wenige Grad (im Ausführungsbeispiel unter einem Winkel von etwa 5°) öffnen, so dass der Rückhaltebügel 7 nach dieser Öffnungsbewegung in der in Fig. 1a gezeigten Stellung in seinem dem Verriegelungssystem 8 zugewandten, d.h. in Fahrtrichtung vorderen Bereich unter einem Winkel um etwa 5° seitlich nach außen absteht bzw. aus der Fahrzeug- bzw. Kabinenkontur herausragt. In seinem entgegensetzen Abschnitt befindet sich der Rückhaltebügel 7 in diesem Stadium bzw. mit seinen in diesem Bereich vorhandenen Anbauteilen noch innerhalb der Kabinenkontur, so dass ohne weitere Maßnahmen eine Schwenkbewegung in die Freigabestellung von Fig. 2a-c noch nicht möglich wäre.

Um diese Schwenkbewegung trotz der zumindest teilweise innerhalb der Fahrzeugkontur befindlichen Stellung des Rückhaltebügels 7 im Stadium von Fig. 1a-c zu ermöglichen, wird erfindungsgemäß der Schwenkbewegung des Rückhaltebügels 7 an dem Fahrzeug zum Erreichen der Freigabestellung von Fig. 2a-c eine Translationsbewegung des Rückhaltebügels 7 quer zur Fahrtrichtung bzw. Fahrzeuglängsrichtung überlagert. Diese Kombination aus Schwenkbewegung und Translationsbewegung erfolgt im Ausführungsbeispiel über ein Drehführungselement 10, dessen Aufbau und Funktion im Weiteren unter Bezugnahme auf Fig. 4a-d erläutert wird.

Gemäß dem Ausführungsbeispiel von Fig. 4a-d sind Bestandteile des Drehführungselementes 10 insbesondere ein innerhalb eines ersten Hohlzylinders 11 konzentrisch zu diesem gelagerter zweiter Hohlzylinder 12, wobei diese Lagerung als Kugelrollenlagerung über in auf der Außenfläche des zweiten Hohlzylinders 12 befindlichen Rillen 12a angeordnete Kugeln 16 erfolgt, die über entsprechend in ihrem Stirnabschnitt halbkugelförmig ausgeformte und am ersten Hohlzylinder 11 in Gewindebohrungen 11 a eingebrachte Schrauben 17 abgestützt werden. Durch diesen Aufbau wird ein Kugelrollenlager geschaffen, bei dem eine axiale Relativbewegung zwischen dem ersten Hohlzylinder 11 und dem zweiten Hohlzylinder 12 entlang der gemeinsamen Längsachse, welche die Elementachse des Drehführungselementes 10 bildet, mit einer Drehbewegung des ersten Hohlzylinders 11 um die Elementachse bei feststehendem zweiten Hohlzylinder 12 einhergeht.

Innerhalb des ersten Hohlzylinders 11 und des zweiten Hohlzylinders 12 nimmt das Drehführungselement 10 ferner eine Druckfeder 13 auf, welche im Ausführungsbeispiel einen zur Vermeidung eines Ausknickens der Druckfeder 13 während der Axialbewegung vorgesehenen und fest in dem zweiten Hohlzylinder 12 konzentrisch verschraubten Dorn 14 umgibt und ihrerseits von einer Hülse 15 aufgenommen wird, die im zusammengebauten Zustand des Drehführungselementes 10 mit einer die Hülse 15 umschließenden weiteren Hülse (nicht dargestellt) ein vorzugsweise schmiermittel- und wartungsfreies Gleitlager bildet. Die Hülse 15 wird konzentrisch in dem ersten Hohlzylinder 11 verschraubt.

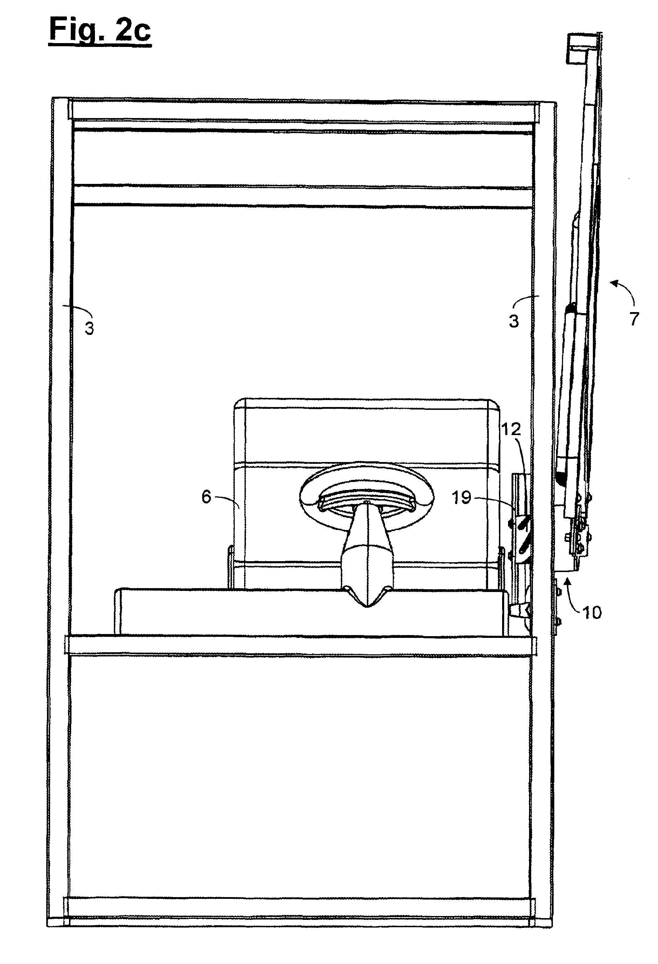

Der erste Hohlzylinder 11 wird über Gewindebohrungen 11 b fest mit dem ein äußeres Blech bildenden Trägerelement 9 an den dort an entsprechenden Positionen vorgesehenen Gewindebohrungen 9a verschraubt und ist somit über das Trägerelement 9 an dem Rückhaltebügel 7 festgelegt, wohingegen der zweite Hohlzylinder 12 über Gewindebohrungen 12b an einem (in Fig. 2c angedeuteten) inneren Trägerblech 19 verschraubt ist.

Im Ausgangszustand, wenn das Verriegelungssystem 8 geschlossen ist und der Rückhaltebügel 7 sich in Sicherungsstellung befindet, ist die Druckfeder 13 innerhalb des Drehführungselementes 10 maximal gespannt. Beim Öffnen des Verriegelungssystems 8 öffnet der Rückhaltebügel 7 zunächst infolge der Wirkung der Federelemente 18, wie bereits vorstehend erläutert, seitlich nach Außen hin (im Ausführungsbeispiel um einen Winkel von 5°). Nachdem die Federelemente 18 den Rückhaltebügel 7 seitlich etwas geöffnet haben, so dass dieser teilweise über die Fahrzeugkontur herausragt, erfolgt infolge der Ankopplung des Rückhaltebügels 7 an das Fahrzeug über das Drehführungselement 10 und die von diesem aufgenommene Druckfeder 13 der bereits beschriebene Bewegungsablauf als Überlagerung aus der durch die Druckfeder 13 bewirkten Axialbewegung und der durch die Kugelrollenlagerung bewirkten Drehbewegung der Hohlzylinder 11 und 12 relativ zueinander bzw. der entsprechenden Schwenkbewegung des Rückhaltebügels 7. Durch den vorstehend beschriebenen Aufbau des Drehführungselementes 10 wird während dieser Bewegung zugleich eine effiziente Axialführung erreicht.

Während der Axialbewegung wird der Rückhaltebügel 7 kontinuierlich in den Bereich außerhalb der Kabinen- bzw. Fahrzeugkontur bewegt und so die Schwenkbewegung bis in die Freigabestellung ermöglicht, ohne dass der Rückhaltebügel 7 selbst bzw. daran angebrachte Anbauten wie Polster an der Kabinen- bzw. Fahrzeugkontur anstoßen.

Die Druckfeder 13 ist vorzugsweise so ausgelegt, dass die durch die Druckfeder 13 bewirkte und infolge des Drehführungselementes 10 mit einer Drehbewegung um die Elementachse überlagerte Schwenkbewegung bereits bei minimaler manueller Kraftausübung stattfindet, d.h. durch die Wirkung der Druckfeder 13 werden die auf den Rückhaltebügel 7 wirkende Schwerkraft sowie die auftretenden Reibungskräfte überwunden. Mit anderen Worten ist die Druckfeder 13 vorzugsweise so ausgelegt, dass sich zu jeder Zeit ein Kräftegleichgewicht zwischen der Federkraft einerseits und den zu überwindenden Gravitations- und Reibungskräften andererseits ergibt, der Rückhaltebügel 7 also von selbst praktisch immer stehen bleibt und nur ein minimales Nachhelfen zum Schwenken in die Freigabeposition notwendig ist. Hierzu kann die Druckfeder 13 insbesondere eine lineare oder leicht regressive Kennlinie aufweisen.

Des Weiteren ist die Druckfeder 13 vorzugsweise so ausgelegt, dass sie in der der Freigabeposition entsprechenden und durch den Anschlag der Kugeln 16 innerhalb der Rollen 12a definierten Endstellung entspannt ist, wodurch Verschleißeffekte vermieden bzw. minimiert werden.

Es ist zu beachten, dass das Drehführungselement 10 bzw. die entsprechende Vorrichtung zur Kopplung zweier Bauteile aneinander nicht auf den Einsatz in Verbindung mit dem erfindungsgemäßen Fahrerschutzsystem beschränkt ist. Vielmehr ist die durch das Drehführungselement 10 erzielte Wirkung, nämlich die Kombination einer definierten Drehbewegung bzw. Rotation um eine Achse mit einer axialen Bewegung bzw. Translation entlang dieser Achse, grundsätzlich auch für andere Anwendungen vorteilhaft einsetzbar, bei denen zwei beidseitig an dem Drehführungselement montierte, externe Bauteile (z.B. Hebel) nicht nur relativ zueinander um einen vorgebbaren Winkel verdreht werden sollen, sondern sich bei dieser Verdrehung zugleich auch in axialer aufeinander zu bewegen oder voneinander wegbewegen sollen.

Dabei stellt auch die Verwendung einer Druckfeder 13 zur Krafterzeugung in axialer Richtung bzw. Herbeiführung der Translationsbewegung nur eine von vielen Möglichkeiten dar. Alternativ kann beispielsweise die Krafterzeugung in axialer Richtung auch über eine geeignete Pneumatik oder Hydraulik erfolgen. Des Weiteren kann durch Variation der Geometrie des Drehführungselementes 10, insbesondere hinsichtlich der Steigung der durch die auf der Außenfläche des zweiten Hohlzylinders 12 befindlichen Rillen 12a beschriebenen Schraubenlinie einerseits und der axialen Ausdehnung des Drehführungselementes 10 andererseits, eine für die jeweilige Anwendung gewünschte Verknüpfung bzw. Übersetzung zwischen Rotations- und Translationsbewegung hergestellt werden. Auf diese Weise können neben dem erfindungsgemäß erzeugten Schwenkwinkel von im Wesentlichen 90° auch beliebige andere Schwenkwinkel (z.B. von 180° oder 270°) eingestellt werden. Ferner kann den jeweiligen Anforderungen entsprechend auch eine Rotation um mehr als 360°, insbesondere auch um ein Vielfaches von 360°, ermöglicht werden.

Unter erneuter Bezugnahme auf Fig. 4a-d ist in dem Ausführungsbeispiel ferner die Schwenkachse der beschriebenen Schwenkbewegung, welche der Elementachse des Drehführungselementes 10 entspricht, gegenüber der Horizontalen um einen Winkel von etwa 2.5° aufwärts geneigt. Abhängig von den konstruktiven Gegebenheiten kann auch ein abweichender Neigungswinkel, vorzugsweise im Bereich von 2° bis 6°, gewählt werden. Des Weiteren kann von einer Neigung auch ganz abgesehen werden.

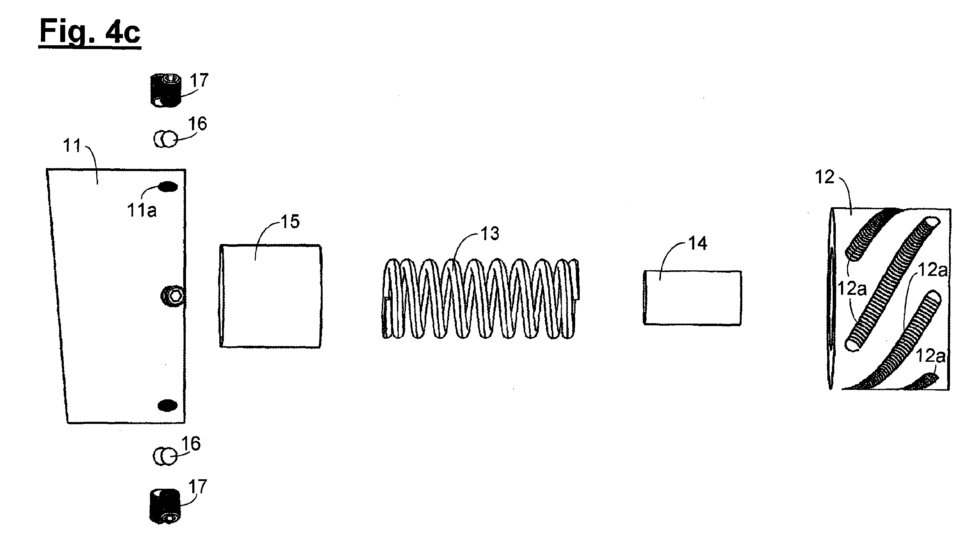

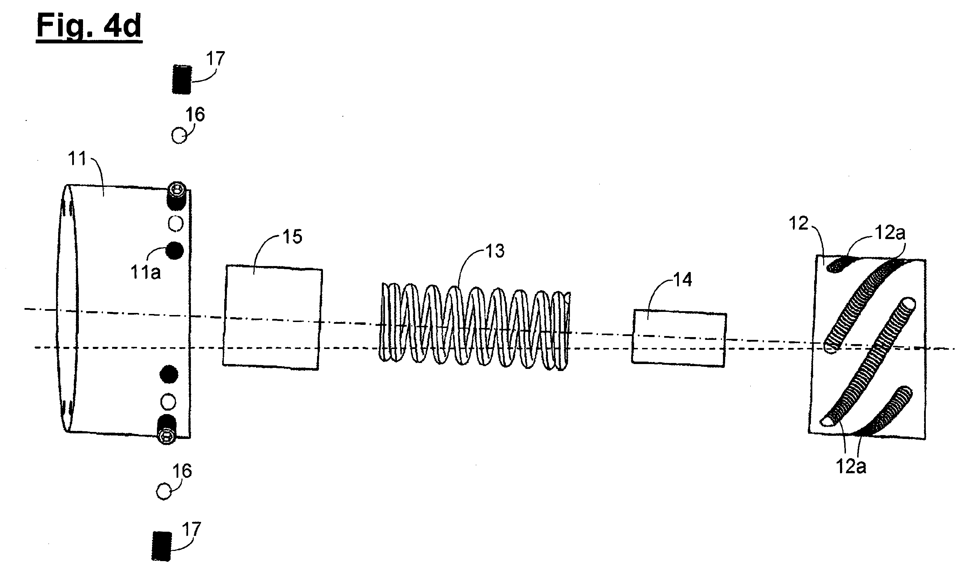

Die Neigung der Schwenkachse gegenüber der Horizontalen kann gemäß Fig. 4d dadurch realisiert werden, dass der Hohlzylinder 11 in solcher Weise angeordnet wird, dass er mit seiner Zylinderachse zunächst unter einer Neigung von z.B. 2.5° zur Horizontalen angeordnet wird, die beiden Stirnflächen dann so "angeschnitten" werden, dass sie parallel zueinander und zur Vertikalen verlaufen, und schließlich der Hohlzylinder 11 mit einer äußeren Abschrägung von 5° (siehe Fig. 4c) versehen wird. Alternativ kann auch ein Trägerblech mit einer Abknickung bzw. Abkantung um einen Winkel von 5° verwendet werden, wobei das Federblechelement dann an diesen abgekanteten Bereich angeschraubt wird.

Infolge der Aufwärtsneigung der Schwenkachse wird erreicht, dass die nach dem Lösen des Verriegelungssystems 8 zu Beginn der Aufwärtsbewegung des Rückhaltebügels 7 durch die Federelemente 18 bewirkte Öffnungsbewegung des Rückhaltebügels 7 aus der Fahrzeugkontur heraus (um im Beispiel 5° nach außen) zum Ende der Schwenkbewegung hin wieder kompensiert wird und ein ansonsten gegebenenfalls drohendes Anstoßen des Rückhaltebügels 7 an Hindernisse vermieden wird.

Wenngleich in der beschriebenen Ausführungsform die Translationsbewegung des Rückhaltebügels 7 quer zur Fahrzeuglängsrichtung gleichzeitig mit der Schwenkbewegung als kombinierte bzw. überlagerte Bewegung realisiert wird, ist die Erfindung nicht hierauf beschränkt. So kann gemäß einer alternativen Ausführungsform auch die Translationsbewegung unabhängig von der Schwenkbewegung erfolgen, indem etwa zunächst der Rückhaltebügel aus der Sicherungsstellung axial in Richtung der Schwenkachse versetzt und erst anschließend in die aufgerichtete Position bzw. Freigabestellung geschwenkt wird.

Wenn die Erfindung auch anhand spezieller Ausführungsformen beschrieben wurde, erschließen sich für den Fachmann zahlreiche Variationen und alternative Ausführungsformen, z.B. durch Kombination und/oder Austausch von Merkmalen einzelner Ausführungsformen. Dementsprechend versteht es sich für den Fachmann, dass derartige Variationen und alternative Ausführungsformen von der vorliegenden Erfindung mit umfasst sind, und die Reichweite der Erfindung nur im Sinne der beigefügten Patentansprüche und deren Äquivalente beschränkt ist.

### Bezugszeichenliste:

- 1: Fahrerschutzdach
- 2: seitliche Öffnung
- 3: vorderer Holm
- 4: hinterer Holm
- 5: oberer Querholm
- 6: Fahrzeugsitz
- 7: Rückhaltebügel
- 8: Verriegelungssystem
- 9: Trägerelement
- 9a: Gewindebohrungen
- 10: Drehführungselement
- 11: erster Hohlzylinder
- 11a: Gewindebohrungen
- 12: zweiter Hohlzylinder
- 12a: Rillen
- 12b: Gewindebohrungen
- 13: Druckfeder
- 14: Dorn
- 15: Hülse
- 16: Kugeln
- 17: Schrauben
- 18: Federelemente
- 19: Trägerblech

## Patentansprüche

1. Fahrerschutzsystem für ein Fahrzeug, mit einem Rückhaltebügel (7), der zwischen einer Sicherungsstellung, in welcher der Rückhaltebügel (7) einen Fahrer gegen Herausfallen aus dem Fahrzeug sichert, und einer Freigabestellung, in welcher der Rückhaltebügel (7) ein Aussteigen des Fahrers aus dem Fahrzeug ermöglicht, um eine Schwenkachse schwenkbar ist, **dadurch gekennzeichnet, dass**
der Rückhaltebügel (7) in der Freigabestellung relativ zu der Sicherungsstellung in Richtung der Schwenkachse versetzt ist.

2. Fahrerschutzsystem nach Anspruch 1, **dadurch gekennzeichnet, dass** der Rückhaltebügel (7) in der Freigabestellung eine zumindest näherungsweise vertikale Position einnimmt.

3. Fahrerschutzsystem nach Anspruch 1 oder 2, **dadurch gekennzeichnet, dass** die Schwenkachse quer zur Fahrzeuglängsrichtung verläuft.

4. Fahrerschutzsystem nach einem der Ansprüche 1 bis 3, **dadurch gekennzeichnet, dass** der Rückhaltebügel (7) beim Verschwenken eine Bewegung in Richtung seiner Schwenkachse ausführt, wobei diese Bewegung vorzugsweise durch ein Kraftübertragungselement unterstützt wird.

5. Fahrerschutzsystem nach einem der vorhergehenden Ansprüche, **dadurch gekennzeichnet, dass** die Versetzung in Richtung der Schwenkachse bei der Überführung von der Sicherungsstellung in die Freigabestellung um eine Strecke von wenigstens 15mm, bevorzugt wenigstens 30mm, weiter bevorzugt wenigstens 40mm erfolgt.

6. Fahrerschutzsystem nach einem der vorhergehenden Ansprüche, **dadurch gekennzeichnet, dass** die Schwenkachse relativ zur Horizontalen in einem Winkel von 0°±10° angeordnet ist, wobei die Schwenkachse vorzugsweise relativ zur Horizontalen um einen Neigungswinkel geneigt ist, dessen Absolutbetrag wenigstens 1° ist und vorzugsweise im Bereich 2° bis 6° liegt.

7. Fahrerschutzsystem nach einem der vorhergehenden Ansprüche, **dadurch gekennzeichnet, dass** sich der Rückhaltebügel (7) in der Sicherungsstellung zumindest teilweise noch innerhalb der Fahrzeugkontur befindet und in der Freigabestellung vollständig außerhalb der Fahrzeugkontur befindet.

8. Fahrerschutzsystem nach einem der vorhergehenden Ansprüche, **dadurch gekennzeichnet, dass** der Rückhaltebügel (7) an einem Holm (4) des Fahrzeuges mittels wenigstens eines Federelementes (18) angelenkt ist, welches in der Sicherungsstellung vorgespannt ist, wobei das Federelement (18) vorzugsweise ein Federstahlblech ist.

9. Fahrerschutzsystem nach Anspruch 8, **dadurch gekennzeichnet, dass** der Rückhaltebügel (7) durch das Federelement (18) nach Lösen des Verriegelungssystems (8) aus einer in Fahrzeuglängsrichtung ausgerichteten Lage in eine zumindest teilweise seitwärts geöffnete Lage überführt wird.

10. Fahrerschutzsystem nach Anspruch 9, **dadurch gekennzeichnet, dass** sich der Rückhaltebügel (7) in dieser zumindest teilweise seitwärts geöffneten Lage wenigstens teilweise noch innerhalb der Fahrzeugkontur befindet.

11. Fahrerschutzsystem nach einem der vorhergehenden Ansprüche, **dadurch gekennzeichnet, dass** der Rückhaltebügel (7) an dem Fahrzeug über eine die Versetzung bzw. Bewegung des Rückhaltebügels (7) in Richtung der Schwenkachse bewirkende oder unterstützende Druckfeder (13) befestigt ist.

12. Fahrerschutzsystem nach einem der vorhergehenden Ansprüche, **dadurch gekennzeichnet, dass** der Rückhaltebügel (7) an dem Fahrzeug über ein Drehführungselement (10) befestigt ist, welches derart ausgelegt ist, dass es der Schwenkbewegung des Rückhaltebügels (7) eine Translationsbewegung des Rückhaltebügels (7) überlagert.

13. Drehelement zur Kopplung zweier Bauteile aneinander, zur Verwendung in einem Fahrerschutzsystem nach einem der vorhergehenden Ansprüche, mit:
• einem ersten Teilelement zur Fixierung an einem ersten Bauteil; und
• einem zweiten Teilelement zur Fixierung an einem zweiten Bauteil;
• wobei das erste Teilelement und das zweite Teilelement derart miteinander in Wirkverbindung stehen, dass eine entlang einer Elementachse des Drehelements erfolgende Relativbewegung zwischen dem ersten Teilelement und dem zweiten Teilelement zwangsweise mit einer Verdrehung des ersten Teilelements und des zweiten Teilelementes relativ zueinander um die Elementachse einhergeht,
**dadurch gekennzeichnet, dass**
• das erste Teilelement als ein erster Hohlzylinder (11) ausgebildet ist und das zweite Teilelement als ein zu dem ersten Hohlzylinder (11) konzentrisch gelagerter zweiter Hohlzylinder (12) ausgebildet ist, wobei die konzentrische Lagerung des ersten Hohlzylinders (11) in Bezug auf den zweiten Hohlzylinder (12) über ein Kugelrollenlager erfolgt;
• und das Drehelement eine Druckfeder zur Übertragung einer die Relativbewegung bewirkenden Kraft auf das erste Teilelement und das zweite Teilelement aufweist.

14. Drehelement nach Anspruch 13, **dadurch gekennzeichnet, dass** das erste Teilelement und das zweite Teilelement koaxial in Bezug auf eine gemeinsame Achse angeordnet sind.

15. Drehelement nach Anspruch 14, **dadurch gekennzeichnet, dass** die gemeinsame Achse die Elementachse ist.

16. Fahrzeug, insbesondere Gabelstapler, mit einem Fahrerschutzsystem nach einem der Ansprüche 1 bis 12 oder einem Drehelement nach einem der Ansprüche 13 bis 15.

## Claims

1. Driver protection system for a vehicle, comprising a restraining bow frame (7) which is pivotable about a pivot axis between a securing position in which the restraining bow frame (7) secures a driver from falling out of the vehicle, and a release position in which the restraining bow frame (7) permits the driver to climb out of the vehicle, **characterised in that**
the restraining bow frame (7) in the release position is displaced relative to the securing position in the direction of the pivot axis.

2. Driver protection system as set forth in claim 1, **characterised in that** the restraining bow frame (7) in the release position assumes an at least approximately vertical position.

3. Driver protection system as set forth in claim 1 or claim 2, **characterised in that** the pivot axis extends transversely relative to the longitudinal direction of the vehicle.

4. Driver protection system as set forth in one of the claims 1 to 3, **characterised in that** the pivotal movement of the restraining bow frame (7) performs a movement in the direction of its pivot axis, wherein said movement is assisted preferably by a force transmission element.

5. Driver protection system as set forth in one of the preceding claims, **characterised in that** the displacement in the direction of the pivot axis in the transfer from the securing position into the release position is effected over a distance of at least 15 mm, preferably at least 30 mm, further preferably at least 40 mm.

6. Driver protection system as set forth in one of the preceding claims, **characterised in that** the pivot axis is arranged at an angle of 0°±10° relative to the horizontal wherein the pivot axis is inclined relative to the horizontal through an angle of inclination, the absolute magnitude of which is at least 1 ° and is preferably in the range between 2° and 6°.

7. Driver protection system as set forth in one of the preceding claims, **characterised in that** in the securing position the restraining bow frame (7) is at least partially still within the vehicle contour and in the release position the restraining bow frame (7) is completely outside the vehicle contour.

8. Driver protection system as set forth in one of the preceding claims, **characterised in that** the restraining bow frame (7) is mounted to a pillar (4) of the vehicle by means of at least one spring element (18) which is biased in the securing position and which is preferably a spring steel strip.

9. Driver protection system as set forth in claim 8, **characterised in that** the restraining bow frame (7) is moved by the spring element (18) after release of the locking system (8) from a position of being oriented in the longitudinal direction of the vehicle into an at least partially sideways-open position.

10. Driver protection system as set forth in claim 9, **characterised in that** the restraining bow frame (7) in said at least partially sideways- open position is still located at least partially within the vehicle contour.

11. Driver protection system as set forth in one of the preceding claims, **characterised in that** the restraining bow frame (7) is secured to the vehicle by way of a compression spring (13) which assists or causes the displacement or movement of the restraining bow frame (7) in the direction of the pivot axis

12. Driver protection system as set forth in one of the preceding claims, **characterised in that** the restraining bow frame (7) is secured to the vehicle by way of a rotary guide element (10) which is so adapted that it superimposes a translatory movement of the restraining bow frame (7) on the pivoting movement of the restraining bow frame (7).

13. Rotary element for coupling two components together for use in a driver protection system as set forth in one of the preceding claims, comprising:
• a first subelement for fixing to a first component, and
• a second subelement for fixing to a second component;
• wherein the first subelement and the second subelement are operatively connected together in such a way that a relative movement between the first subelement and the second subelement, along an element axis of the apparatus, is necessarily accompanied by a rotary movement of the first subelement and the second subelement relative to each other about the element axis,
**characterised in that**
• the first subelement is in the form of a first hollow cylinder (11) and the second subelement is in the form of a second hollow cylinder (12) mounted concentrically relative to the first hollow cylinder, wherein the concentric mounting of the first hollow cylinder (11) in relation to the second hollow cylinder (12) is effected by way of a ball rolling mounting;
• and the rotary element has a compression spring for transferring a force to the first subelement and the second subelement causing a relative movement.

14. Rotary element as set forth in claim 13, **characterised in that** the first subelement and the second subelement are arranged coaxially in relation to a common axis.

15. Rotary element as set forth in claim 14, **characterised in that** the common axis is the element axis.

16. Vehicle, in particular a fork lift truck, comprising a driver protection system as set forth in claims 1 to 12 or a rotary element as set forth in one of the claims 13 to 15.

## Revendications

1. Système de protection du conducteur d'un véhicule, comportant un arceau de retenue (7) qui peut pivoter autour d'un axe de rotation entre une position de sécurité, dans laquelle l'arceau de retenue (7) empêche un conducteur de tomber du véhicule, et une position de libération, dans laquelle l'arceau de retenue (7) permet au conducteur de descendre du véhicule, **caractérisé en ce que**
l'arceau de retenue (7) est, en position de libération, déplacé en direction de l'axe de rotation par rapport à la position de sécurité.

2. Système de protection du conducteur selon la revendication 1, **caractérisé en ce que** l'arceau de retenue (7) prend, en position de libération, une position au moins approximativement verticale.

3. Système de protection du conducteur selon la revendication 1 ou 2, **caractérisé en ce que** l'axe de rotation s'étend transversalement par rapport à la direction longitudinale du véhicule.

4. Système de protection du conducteur selon l'une quelconque des revendications 1 à 3, **caractérisé en ce que** l'arceau de retenue (7) fait, lors du pivotement, un mouvement en direction de son axe de rotation, ce mouvement étant soutenu, de préférence par un élément de transmission.

5. Système de protection du conducteur selon l'une quelconque des revendications précédentes, **caractérisé en ce que** le déplacement en direction de l'axe de rotation est effectué, lors du passage de la position de sécurité à la position de libération, sur une distance d'au moins 15 mm, de préférence d'au moins 30 mm, de préférence encore d'au moins 40 mm.

6. Système de protection du conducteur selon l'une quelconque des revendications précédentes, **caractérisé en ce que** l'axe de rotation est orienté selon un angle pouvant varier de 0° à ±10° par rapport à l'horizontale, l'axe de rotation étant incliné, de préférence par rapport à l'horizontale, suivant un angle d'inclinaison dont la valeur absolue est d'au moins 1° et se situe, de préférence dans la plage allant de 2° à 6°.

7. Système de protection du conducteur selon l'une quelconque des revendications précédentes, **caractérisé en ce que** l'arceau de retenue (7) se situe, en position de sécurité, au moins partiellement encore dans le contour du véhicule et, en position de libération, complètement en dehors du contour du véhicule.

8. Système de protection du conducteur selon l'une quelconque des revendications précédentes, **caractérisé en ce que** l'arceau de retenue (7) est articulé sur un longeron (4) du véhicule au moyen d'un élément à ressort (18) qui est précontraint en position de sécurité, l'élément à ressort (18) étant de préférence une tôle d'acier à ressort.

9. Système de protection du conducteur selon la revendication 8, **caractérisé en ce que** l'arceau de retenue (7) passe grâce à l'élément à ressort (18), après activation du système de verrouillage (8), d'une position orientée dans la direction longitudinale du véhicule à une position ouverte latéralement au moins partiellement.

10. Système de protection du conducteur selon la revendication 9, **caractérisé en ce que** l'arceau de retenue (7) se situe, dans cette position ouverte latéralement au moins partiellement, au moins partiellement encore à l'intérieur du contour du véhicule.

11. Système de protection du conducteur selon l'une quelconque des revendications précédentes, **caractérisé en ce que** l'arceau de retenue (7) est fixé au véhicule par l'intermédiaire d'un ressort de pression (13) provoquant ou soutenant le déplacement ou le mouvement de l'arceau de retenue (7) en direction de l'axe de rotation.

12. Système de protection du conducteur selon l'une quelconque des revendications précédentes, **caractérisé en ce que** l'arceau de retenue (7) est fixé au véhicule par l'intermédiaire d'un élément de guidage en rotation (10) qui est dimensionné de telle manière qu'un mouvement de translation de l'arceau de retenue (7) se superpose au mouvement de pivotement de l'arceau de retenue (7).

13. Élément rotatif pour accoupler deux composants ensemble, destiné à être utilisé dans un système de protection du conducteur selon l'une quelconque des revendications précédentes, comportant :
• un premier élément partiel à fixer à un premier composant ; et
• un second élément partiel à fixer à un second composant;
• le premier élément et le second élément étant en liaison active l'un avec l'autre de telle manière qu'un mouvement relatif autour de l'axe d'élément susceptible d'être réalisé le long d'un axe d'élément de l'élément de rotation entre le premier élément partiel et le second élément partiel est obligatoirement accompagné d'une rotation du premier élément partiel et du second élément partiel l'un par rapport à l'autre autour de l'axe d'élément,
**caractérisé en ce que**
• le premier élément partiel est réalisé sous la forme d'un premier cylindre creux (11) et le second élément partiel sous la forme d'un second cylindre creux (12) monté de façon concentrique par rapport au premier cylindre creux (11), le montage concentrique du premier cylindre creux (11) par rapport au second cylindre creux (12) étant effectué par l'intermédiaire d'un roulement à rouleaux sphériques ;
• et l'élément rotatif présente un ressort de pression pour transmettre au premier élément partiel et au second élément partiel une force provoquant le mouvement relatif.

14. Élément rotatif selon la revendication 13, **caractérisé en ce que** le premier élément partiel et le second élément partiel sont disposés coaxialement par rapport à un axe commun.

15. Élément rotatif selon la revendication 14, **caractérisé en ce que** l'axe commun est l'axe d'élément.

16. Véhicule, notamment chariot à fourche, comportant un système de protection du conducteur selon l'une quelconque des revendications 1 à 12 ou un élément rotatif selon l'une quelconque des revendications 13 à 15.
